# DEMANDE DE BREVET EUROPEEN

(11) **EP 3 680 004 A1**
(43) Date de publication de la demande: **15.07.2020**
(21) Numéro de dépôt: 19217285.6
(22) Date de dépôt: 18.12.2019
(51) Int. Cl.: B01D 46/24, F01N 3/28, F01N 13/00, B01D 53/94

(54) **SYSTÈME DE DÉPOLLUTION D'UN VÉHICULE**

(30) Priorité: 09.01.2019 FR 1900175
(71) Demandeur: RENAULT s.a.s., 92100 Boulogne-Billancourt (FR)
(72) Inventeur: NOBRE-MENDE, Acacio, 91120 Palaiseau (FR); VILLAIN, Nathalie, 89116 La Celle St Cyr (FR)

(57) **Abrégé**

L'invention se rapporte à un système de dépollution (1, 100) des gaz d'échappement d'un moteur de véhicule, comportant un boitier (2), un bloc monolithique cylindrique (3, 103) de dépollution présentant une surface d'entrée (11, 111) et une surface de sortie (12, 112), et un élément de mesure (4) d'un paramètre de caractérisation des gaz en sortie du bloc (3, 103), le bloc (3, 103) et l'élément de mesure (4) étant logés dans le boitier (2) de sorte que ledit élément de mesure (4) soit situé en aval dudit bloc (3, 103).

Selon l'invention, la surface de sortie (112) présente au moins deux faces planes (117, 118) inclinées l'une par rapport à l'autre, de manière à créer dans le boitier (2) un espace local supplémentaire (115) entre la surface de sortie (112, 118) et l'élément de mesure (4) afin de permettre audit élément (4) de pouvoir fonctionner correctement dans ledit boitier (2).

## Description

L'invention se rapporte à un système de dépollution d'un véhicule.

Le document FR-A1-3036733 divulgue un système de dépollution comprenant un boitier dans lequel sont logés un catalyseur d'oxydation et un filtre à particules, ces deux dispositifs apparaissant sous la forme de monolithes. Le boitier est allongé et présente un méplat s'étendant sur toute la longueur de l'un desdits monolithes. Une telle configuration entraine que le monolithe le long duquel s'étend le méplat du boitier, présente également un méplat, afin que ledit boitier épouse étroitement la forme des deux monolithes. Le monolithe n'est pas biseauté et le boitier n'est pas conçu pour loger un élément de mesure d'un paramètre de caractérisation des gaz d'échappement.

Le document FR-A1-3030619 divulgue un dispositif de dépollution comportant en amont un catalyseur d'oxydation (de type monolithe) et en aval un filtre à particules (également de type monolithe). Le catalyseur présente une extrémité d'entrée en biseau permettant de reculer le bloc monolithique dans la ligne d'échappement, de manière à dégager une portion terminale de ladite ligne pour assurer l'évacuation des gaz avec un débit accru. Le biseau n'est pas en face arrière du dispositif de dépollution, et il ne permet pas de loger un élément de mesure d'un paramètre de caractérisation des gaz d'échappement.

Un système de dépollution des gaz d'échappement d'un véhicule selon l'invention, présente un bloc monolithique dont la géométrie particulière permet la présence d'un élément de mesure d'un paramètre de caractérisation des gaz en sortie dudit bloc, ledit bloc gardant intactes ses capacités de dépollution.

L'invention a pour objet un système de dépollution des gaz d'échappement d'un moteur de véhicule, comportant un boitier, un bloc monolithique cylindrique de dépollution présentant une surface d'entrée et une surface de sortie, et élément de mesure d'un paramètre de caractérisation des gaz en sortie du bloc, le bloc et l'élément de mesure étant logés dans le boitier de sorte que ledit élément de mesure soit situé en aval dudit bloc du côté de la surface de sortie.

Selon l'invention, la surface de sortie présente au moins deux faces planes inclinées l'une par rapport à l'autre, de manière à créer dans le boitier un espace local supplémentaire entre la surface de sortie et l'élément de mesure afin de permettre audit élément de pouvoir fonctionner correctement dans ledit boitier. Le boitier est destiné à être inséré dans une ligne d'échappement d'un moteur de véhicule, de sorte que les gaz d'échappement traversent le bloc monolithique de dépollution en passant d'abord par la surface d'entrée avant de ressortir au niveau de la surface de sortie où l'élément de mesure va permettre de donner une indication sur l'état des gaz d'échappement à la sortie dudit bloc. Le principe de l'invention est de réduire le volume du bloc par rapport à une configuration pour laquelle ledit bloc présenterait une surface de sortie plane et perpendiculaire à son axe de révolution, de manière à créer localement un espace dans le boitier afin de permettre un bon fonctionnement de l'élément de mesure. En effet, il est important que subsiste un espace suffisant entre le bloc et l'élément de mesure afin que les mesures réalisées par ledit élément ne soient pas biaisées par la présence trop proche du bloc. Le terme « localement » signifie que l'espace supplémentaire créer dans le boitier grâce à l'usinage spécifique de la surface de sortie, s'étend sur moins d'un rayon du bloc monolithique cylindrique. Le bloc monolithique cylindrique peut par exemple être un catalyseur, ou un filtre à particules ou un assemblage de ces deux éléments. L'élément de mesure peut par exemple être une sonde à Nox. Les termes surface d'entrée, surface de sortie et aval doivent être interprétés par rapport au sens de propagation des gaz d'échappement dans le boitier. Préférentiellement l'une des deux faces inclinées s'étend perpendiculairement à l'axe de révolution du bloc.

Selon une caractéristique possible de l'invention, l'espace libre supplémentaire est créé le long d'un diamètre du bloc monolithique, sur une longueur qui est inférieure au rayon dudit bloc. De cette manière l'espace libre supplémentaire créé au niveau de la surface de sortie du bloc est localisé dans une demi section transversale du bloc.

Selon une caractéristique possible de l'invention, la surface de sortie présente une première partie plane qui est perpendiculaire à l'axe de révolution du bloc et qui s'étend au-delà du rayon dudit bloc, et une deuxième partie plane en continuité de ladite première partie et inclinée par rapport à celle-ci. Pour une telle configuration, la surface de sortie du bloc est localement biseautée, à travers la présence de la deuxième partie plane inclinée par rapport à la première partie. Les deux parties inclinées sont en continuité l'une de l'autre, la surface de la première partie étant supérieure à la surface de la deuxième partie.

Selon une caractéristique possible de l'invention, l'inclinaison de la deuxième partie s'effectue dans un sens traduisant un enlèvement de matière par rapport à une configuration pour laquelle la deuxième partie serait dans le même plan que celui de la première partie.

Selon une caractéristique possible de l'invention, le bloc monolithique a d'abord été allongé par rapport aux blocs cylindriques existants, puis a subi un l'enlèvement de matière local au niveau de sa surface de sortie, afin de créer l'espace libre supplémentaire permettant à l'élément de mesure de fonctionner dans de bonnes conditions. Le volume de l'enlèvement de matière peut rester inférieur au volume initialement ajouté grâce à l'allongement du bloc. En effet, il est important que le bloc monolithique conserve intactes, voire augmente légèrement si possible, ses capacités de dépollution. Par conséquent, puisque la création de l'espace supplémentaire se traduit par un enlèvement de matière local au niveau du bloc, il est avantageux de rallonger préalablement celui-ci afin qu'il conserve un volume quasi-constant ou légèrement augmenté.

Selon une caractéristique possible de l'invention, le boitier est cylindrique et l'élément de mesure est une pièce allongée s'étendant radialement vers l'axe de révolution dudit boitier.

Selon une caractéristique possible de l'invention, l'élément de mesure est à choisir parmi une sonde à oxygène, une sonde à oxydes d'azote, une sonde à ammoniac et un capteur de température. Les exemples ci-dessus sont juste mentionnés à titre illustratif et ne sont donc pas limitatifs.

Selon une caractéristique possible de l'invention, le bloc monolithique est un catalyseur.

L'invention a pour autre objet un bloc monolithique de dépollution de gaz d'échappement pour la réalisation d'un système de dépollution conforme à l'invention, ledit bloc présentant une forme cylindrique et étant dotée d'une surface d'entrée et d'une surface de sortie.

Selon l'invention, la surface de sortie présente au moins deux faces planes inclinées l'une par rapport à l'autre, de manière à créer dans le boitier un espace local supplémentaire entre la surface de sortie et l'élément de mesure, afin de permettre audit élément de pouvoir fonctionner correctement dans ledit boitier.

Selon une caractéristique possible de l'invention, la surface de sortie présente une première partie plane qui est perpendiculaire à l'axe de révolution du bloc et qui s'étend au-delà du rayon dudit bloc, et une deuxième partie plane en continuité de ladite première partie et inclinée par rapport à celle-ci.

Un système de dépollution selon l'invention présente l'avantage de permettre la présence d'un élément de mesure dans le boitier grâce à un usinage simple et judicieux du bloc monolithique. Il a de plus l'avantage de garder intactes ses capacités de dépollution, voire de les améliorer légèrement, malgré la présence de l'élément de mesure dans le boitier.

On donne, ci-après, une description détaillée d'un mode de réalisation préféré d'un système de dépollution selon l'invention, en se référant aux figures suivantes :
[Fig. 1] La figure 1 est une vue simplifiée en coupe d'un système de dépollution des gaz d'échappement d'un moteur de véhicule, selon l'état de la technique,
[Fig. 2] La figure 2 est une vue simplifiée en coupe d'un système de dépollution des gaz d'échappement d'un moteur de véhicule, selon l'invention,
[Fig. 3] La figure 3 est une vue en perspective d'un bloc monolithique d'un système de dépollution selon l'invention,
[Fig. 4] La figure 4 est une vue de côté de l'agencement d'un élément de mesure par rapport à un bloc monolithique d'un système de dépollution selon l'invention.

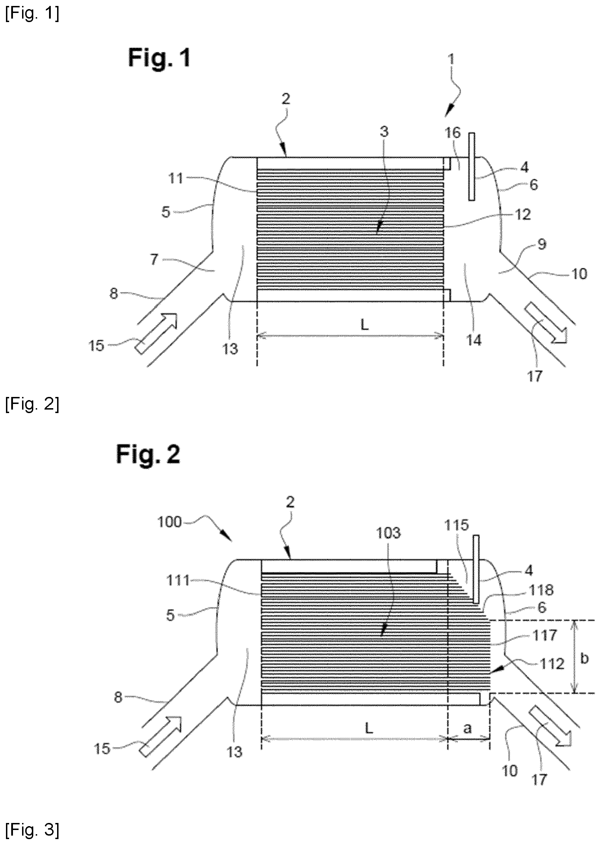

En se référant à la figure 1, un système de dépollution 1 des gaz d'échappement d'un véhicule équipé d'un moteur thermique, comprend un boitier 2, un bloc monolithique 3 de dépollution et un élément de mesure 4 d'un paramètre de caractérisation desdits gaz en sortie dudit bloc 3. Le boitier 2 est de forme cylindrique et est obturé à ses deux extrémités, considérées le long de son axe de révolution, par une paroi d'entrée 5 et par une paroi de sortie 6. Chacune de ces parois 5, 6 a un contour circulaire et est légèrement bombée. La paroi d'entrée 5 possède une ouverture 7 dans laquelle débouche une tubulure d'arrivée 8 des gaz d'échappement, et la paroi de sortie 6 possède également une ouverture 9 de laquelle part une tubulure de sortie 10 par laquelle sont évacués les gaz ayant traversé le bloc monolithique 3. Le boitier 2 et les deux tubulures 8, 10 font partie intégrante d'une ligne d'échappement d'un moteur thermique de véhicule. Le bloc monolithique 3 est un catalyseur ayant une forme cylindrique, possédant au niveau de ses deux extrémités considérées le long de son axe de révolution, une surface d'entrée 11 et une surface de sortie 12, lesdites surfaces 11, 12 étant planes et ayant un contour circulaire. Ce catalyseur 3 est une structure céramique, composée par des canaux ou cellules parallèles s'étendant parallèlement à son axe de révolution, et qui sont séparés par des parois de nature chimique quelconque, comme par exemple de la cordiérite. Dans les parois de cette structure, peut être déposée une imprégnation, telle que par exemple de l'alumine contenant des métaux précieux.

Le bloc monolithique 3 est placé dans le boitier 2 de sorte que leurs axes de révolution respectifs soient confondus. La longueur L du bloc monolithique 3 est inférieure à celle du boitier 2, de manière à ce que, une fois que ledit bloc 3 a été positionné dans le boitier 2 de façon définitive, il subsiste un espace amont 13 entre la surface d'entrée 11 du bloc 3 et la paroi d'entrée 5 du boitier, et un espace aval 14 entre la surface de sortie 12 dudit bloc 3 et la paroi de sortie 6 dudit boitier 2.

L'élément de mesure 4 d'un paramètre de caractérisation des gaz à la sortie du bloc monolithique 3 peut être, par exemple, un capteur de température, une sonde à oxygène apte à mesurer une concentration d'oxygène dans les gaz ayant traversé le bloc monolithique, qui est représentative de la richesse des gaz une sonde à NOx apte à mesurer une concentration d'oxydes d'azote dans les gaz, etc. Un tel élément est fixé à la paroi cylindrique délimitant le boitier 2, de manière à déboucher dans l'espace 14 aval située entre la surface de sortie 12 dudit bloc 3 et la paroi de sortie 6 dudit boitier 2. Cet élément 4 de mesure est allongé, et s'étend radialement vers l'intérieur du boitier 2, c'est-à-dire parallèlement à la surface de sortie 12 du bloc 3 en ménageant un espace 16 avec ladite surface de sortie 12.

En effet, la mesure des grandeurs physiques des gaz, notamment de la température ou de la richesse, en amont mais également en aval du catalyseur monolithique 3, permet d'adapter les stratégies de pilotage des systèmes de dépollution, via par exemple les modes d'injection moteur pour permettre des régénération ou purges des systèmes de dépollution 1. Dans le boitier 2, la disposition du catalyseur 3 et des sondes 4, doit donc être ajustée de façon que l'arrosage aérodynamique de la sonde 4 assure une bonne représentativité de la mesure en son « nez » vis-à-vis du mélange homogène à la sortie du bloc monolithique 3.

En raison de la nature de la structure du monolithe 3, les gaz sortant du monolithe 3 imprégné ont une forte tendance à avoir un régime laminaire et donc peu représentatif du mélange homogène lorsqu'ils sont mesurés trop proches des canaux. Une distance minimale entre la surface de sortie 6 du monolithe 3 et la sonde 4 est requis pour maximiser la représentativité des mesures. Ainsi, dans un volume de boitier 2 donné, la distance exigée entre le bloc monolithique 3 et la sonde 4 nécessaire au bon fonctionnement du système de dépollution 1, entraine une réduction des volumes des monolithes 3 implantables. En fonction des systèmes de dépollution et des sondes mises en œuvre, il convient dans certains cas de réduire les volumes de céramique pour implanter les sondes dans un environnement gazeux homogène (avec turbulences).

Dans le système de dépollution 1 de l'état de la technique représenté à la figure 1, les gaz d'échappement passent par la tubulure d'arrivée 8 comme l'indique la flèche 15 pour arriver dans l'espace amont 13 avant de pénétrer dans le catalyseur 13 monolithique. Les gaz ressortent dans l'espace aval 14 après avoir traversé ledit catalyseur 3, où l'élément 4 mesure un paramètre de caractérisation des gaz. Les gaz sont ensuite évacués du boitier 2 par la tubulure de sortie 10 comme l'indique la flèche 17.

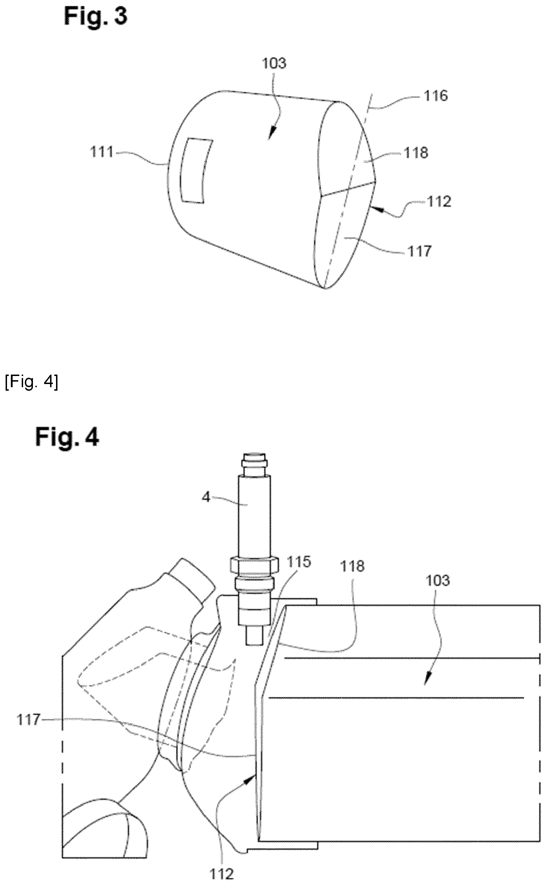

En se référant aux figures 2 et 3, dans un système de dépollution 100 selon l'invention, le catalyseur formant le bloc monolithique 103 a été rallongé par rapport aux blocs monolithiques 3 de l'état de la technique, tels que par exemple celui qui est représenté à la figure 1, et a subi un enlèvement de matière au niveau de la surface de sortie 112.

En effet, en se référant à la figure 2, le catalyseur sous forme monolithique 103 présente une surface d'entrée 111 analogue à celle 11 des catalyseurs 3 de l'état de la technique. Ce catalyseur 103 est placé dans le boitier 2, de manière à ce que sa surface d'entrée 111 se retrouve dans la même position que celle de ladite surface d'entrée 11 desdits blocs existants 3. En revanche, le bloc monolithique 103 a été rallongé d'une longueur « a » du côté de la surface de sortie 112, si bien que sa longueur totale vaut maintenant L+ a. Or, si ce rallongement était homogène sur la totalité de la section transversale du bloc monolithique 103, il est aisé de constater que la présence de l'élément de mesure 4 empêcherait ce rallongement homogène, si l'on suppose que ledit élément de mesure 15 restait à la même place dans le boitier 2. Pour rendre toutefois possible le rallongement du bloc monolithique 103 tout en maintenant l'élément de mesure 15 à la même place dans le boitier 2, ledit bloc 103 doit subir un enlèvement de matière, de manière à créer un espace 115 permettant audit élément de mesure 15 de se maintenir à une certaine distance du bloc 103 afin d'effectuer des mesures représentatives de l'état réel des gaz à la sortie du bloc 103.

En se référant aux figures 2 et 3, cet enlèvement de matière se traduit par la création d'un biseau au niveau de la surface de sortie 112. Autrement dit, ladite surface de sortie 112 présente une première partie plane 117 qui est perpendiculaire à l'axe de révolution du bloc 113 et qui s'étend sur plus d'un rayon dudit bloc, et une deuxième partie plane 118 en continuité de ladite première partie 117 et inclinée par rapport à celle-ci. L'inclinaison de la deuxième partie 118 va dans le sens d'un enlèvement de matière par rapport à une configuration pour laquelle ladite deuxième partie 118 serait dans le même plan que celui de la première partie 117. La première partie 117 présente un axe de symétrie 116 et s'étend sur une longueur « b » le long dudit axe de symétrie 117, qui est supérieur à un rayon d'une section transversale du bloc monolithique 103. De cette manière, la surface de la première partie 117 est supérieure à celle de la deuxième partie 118.

En se référant à la figure 4, grâce à la création de l'espace supplémentaire 115 conforme à celui qui vient d'être décrit, l'élément de mesure 4 peut avoir le même positionnement dans le boitier 2 sans avoir à subir le moindre déplacement ou la moindre modification structurelle, et conserver une grande précision et une grande fiabilité au niveau de la mesure du taux de Nox en sortie de catalyseur 103. Un système de dépollution 100 selon l'invention garde intact son pouvoir de dépollution par rapport aux systèmes existants 1, grâce à une conservation du volume du catalyseur 103 et à la possibilité d'utiliser un élément de mesure dans de bonnes conditions, et dont les mesures vont conditionner les différentes stratégies d'injection de carburant dans le moteur, en vue d'obtenir une dépollution optimisée.

Le terme « enlèvement de matière » est une image aidant à mieux comprendre la nouvelle configuration de la surface de sortie 112 du bloc 103 par rapport à une configuration pour laquelle le bloc monolithe 3 est cylindrique et homogène. En effet, dans la réalité, le bloc 103 ne subit aucun enlèvement de matière effectif, car il est directement fabriqué avec une surface de sortie 112 biseautée.

## Revendications

1. Système de dépollution (1, 100) des gaz d'échappement d'un moteur de véhicule, comportant un boitier (2), un bloc monolithique cylindrique (3, 103) de dépollution présentant une surface d'entrée (11, 111) et une surface de sortie (12, 112), et un élément de mesure (4) d'un paramètre de caractérisation des gaz en sortie du bloc (3, 103), le bloc (3, 103) et l'élément de mesure (4) étant logés dans le boitier (2) de sorte que ledit élément de mesure (4) soit situé en aval dudit bloc (3, 103) du côté de la surface de sortie (12, 112), **caractérisé en ce que** la surface de sortie (112) présente au moins deux faces planes (117, 118) inclinées l'une par rapport à l'autre, de manière à créer dans le boitier (2) un espace local supplémentaire (115) entre la surface de sortie (112, 118) et l'élément de mesure (4) afin de permettre audit élément (4) de pouvoir fonctionner correctement dans ledit boitier (2).

2. Système de dépollution selon la revendication 1, **caractérisé en ce que** l'espace libre supplémentaire (115) est créé le long d'un diamètre du bloc monolithique (103), sur une longueur qui est inférieure au rayon dudit bloc (103).

3. Système de dépollution selon la revendication 2, **caractérisé en ce que** la surface de sortie (112) présente une première partie plane (117) qui est perpendiculaire à l'axe de révolution du bloc et qui s'étend au-delà du rayon dudit bloc (103), et une deuxième partie plane (118) en continuité de ladite première partie (117) et inclinée par rapport à celle-ci.

4. Système de dépollution selon la revendication 3, **caractérisé en ce que** l'inclinaison de la deuxième partie (118) s'effectue dans un sens traduisant un enlèvement de matière par rapport à une configuration pour laquelle la deuxième partie (118) serait alignée sur la première partie (117).

5. Système de dépollution selon l'une quelconque des revendications 1 à 4, **caractérisé en ce que** le bloc monolithique (103) a d'abord été allongé par rapport aux blocs cylindriques (3) existants, puis a subi un l'enlèvement de matière local au niveau de sa surface de sortie (112), afin de créer l'espace libre supplémentaire (115) permettant à l'élément de mesure (4) de fonctionner dans de bonnes conditions.

6. Système de dépollution selon l'une quelconque des revendications 1 à 5, **caractérisé en ce que** le boitier (2) est cylindrique et **en ce que** l'élément de mesure (4) est une pièce allongée s'étendant radialement vers l'axe de révolution dudit boitier (2).

7. Système de dépollution selon l'une quelconque des revendications 1 à 6, **caractérisé en ce que** l'élément de mesure (4) est à choisir parmi une sonde à oxygène, une sonde à oxydes d'azote, une sonde à ammoniac et un capteur de température.

8. Système de dépollution selon l'une quelconque des revendications 1 à 7, **caractérisé en ce que** le bloc monolithique (103) est un catalyseur.

9. Bloc monolithique (103) de dépollution de gaz d'échappement pour la réalisation d'un système de dépollution conforme à l'une quelconque des revendications 1 à 8, ledit bloc (103) présentant une forme cylindrique et étant dotée d'une surface d'entrée (111) et d'une surface de sortie (112), **caractérisé en ce que** la surface de sortie (112) présente au moins deux faces planes (117, 118) inclinées l'une par rapport à l'autre, de manière à créer dans le boitier un espace local supplémentaire (115) entre la surface de sortie (112, 118) et l'élément de mesure (4), afin de permettre audit élément (4) de pouvoir fonctionner correctement dans ledit boitier (2).

10. Bloc monolithique selon la revendication 9, **caractérisé en ce que** la surface de sortie (112) présente une première partie plane (117) qui est perpendiculaire à l'axe de révolution du bloc (103) et qui s'étend au-delà du rayon dudit bloc (103), et une deuxième partie plane (118) en continuité de ladite première partie (117) et inclinée par rapport à celle-ci
